# EUROPEAN PATENT APPLICATION

(11) **EP 4 611 151 A1**
(43) Date of publication of application: **03.09.2025**
(21) Application number: 23924992.3
(22) Date of filing: 13.11.2023
(51) Int. Cl.: H01M 50/367, H01M 50/358

(54) **BATTERY TRAY AND BATTERY PACK**

(30) Priority: 28.02.2023 CN 202320461989 U
(71) Applicant: BYD Company Limited, Shenzhen, Guangdong 518118 (CN)
(72) Inventor: LIAO, Zhengyuan, Shenzhen, Guangdong 518118 (CN); XIE, Shifeng, Shenzhen, Guangdong 518118 (CN); ZOU, Wang, Shenzhen, Guangdong 518118 (CN); ZHANG, Xihu, Shenzhen, Guangdong 518118 (CN); WANG, Xiaolong, Shenzhen, Guangdong 518118 (CN)
(74) Representative: Wu, Ting
(86) International application number: PCT/CN2023/131366
(87) International publication number: WO 2024/179041

(57) **Abstract**

Disclosed is a battery pack having a battery tray. The battery tray includes a bottom plate, two side beams arranged opposite to each other, and two edge beams connected between the two side beams and arranged opposite to each other, where the two side beams and the two edge beams are each connected to a peripheral edge of the bottom plate, an accommodating cavity for accommodating a battery cell assembly is enclosed by the two side beams, the two edge beams, and the bottom plate, explosion-proof valves are arranged on the two side beams respectively, an exhaust channel extending in a length direction of the edge beam is formed on the edge beam, two end portions of an inner wall of the edge beam are provided with vent grooves that are separately in communication with the exhaust channel, and the vent groove is configured to be able to communicate with a gap between the side beam and the battery cell assembly.

## Description

### CROSS-REFERENCE TO RELATED APPLICATIONS

The present disclosure claims priority to Chinese Patent Application No. 202320461989.0, filed with the China National Intellectual Property Administration on February 28, 2023 and entitled "BATTERY TRAY AND BATTERY PACK", which is incorporated herein by reference in its entirety.

### TECHNICAL FIELD

The present disclosure relates to the technical field of batteries, and in particular to a battery tray and a battery pack.

### BACKGROUND

An exhaust channel is arranged on a beam to facilitate circulation of a gas in a battery pack. Holes are provided on a beam opposite an explosion-proof valve of each battery cell in the related technology. With such a design, it is increasingly difficult to process a tray, and structural strength of the beam is affected by an excessively large quantity of holes. Moreover, a high-temperature gas flow ejected from a battery cell enters the exhaust channel, or may be likely to be transmitted from holes corresponding to an explosion-proof valve of another battery cell, affecting the another battery cell.

### SUMMARY

An objective of the present disclosure is to provide a battery tray and a battery pack, so as to at least partially resolve the problem existing in the related technology.

According to a first aspect of the present disclosure, a battery tray is provided, including:
a bottom plate;
two side beams arranged opposite to each other; and
two edge beams connected between the two side beams, where the two edge beams are arranged opposite to each other, where
the two side beams and the two edge beams are each connected to a peripheral edge of the bottom plate, an accommodating cavity for accommodating a battery cell assembly is enclosed by the two side beams, the two edge beams, and the bottom plate, explosion-proof valves are arranged on the two side beams respectively, an exhaust channel extending in a length direction of the edge beam is formed on the edge beam, two end portions of an inner wall of the edge beam are provided with vent grooves respectively, the vent groove is in communication with the exhaust channel, and the vent groove is configured to be able to communicate with a gap between the side beam and the battery cell assembly.

According to an embodiment, the battery cell assembly includes a plurality of battery cell units arranged side by side, at least one separation beam is connected between the two edge beams, the separation beam is used for separating the battery cell units arranged side by side, a support spans the separation beam, and a fastening hole for fastening the support is provided on the edge beam.

According to an embodiment, a sealing cover covers the edge beam and the side beam, and a sealing adhesive is arranged between the sealing cover and the edge beam and/or the side beam.

According to an embodiment, a recess for placing the sealing adhesive is formed at a top end of the edge beam and/or the side beam.

According to an embodiment, a connecting frame is connected to a top end of an outer wall of the edge beam, and the connecting frame is used for abutting against the sealing cover.

According to an embodiment, a first thickening portion is formed on a top wall of the edge beam, the first thickening portion has a thickness greater than or equal to 11 mm, and the sealing cover is connected to the first thickening portion by means of a first fastener.

According to an embodiment, the edge beam is configured as a hollow structure.

According to an embodiment, a plurality of ribs are connected between the inner wall and the outer wall of the edge beam.

According to an embodiment, one first rib and two second ribs are connected between the inner wall and the outer wall of the edge beam, the two second ribs are located on two sides of the first rib respectively, the first rib is vertically arranged between the inner wall and the outer wall of the edge beam, and the two second ribs are inclined from the inner wall to the outer wall of the edge beam towards a direction away from the first rib.

According to an embodiment, the edge beam includes a body section and a connecting section, the connecting section is vertically arranged at a bottom end of an outer wall of the body section, both the exhaust channel and the vent groove are provided on the body section, and a plurality of lifting lug holes at intervals are provided on the connecting section in a length direction of the connecting section, so as to be connected to a vehicle.

According to an embodiment, at least one inwardly recessed notch is provided at an end portion of the connecting section away from the body section.

According to an embodiment, a second thickening portion is formed on a bottom wall of the connecting section close to the body section, the second thickening portion has a thickness greater than or equal to 11 mm, a lower end of the bottom plate is provided with a guard plate, and the guard plate is connected to the second thickening portion by means of a second fastener.

According to a second aspect of the present disclosure, a battery pack is further provided, including: the battery tray described above and the battery cell assembly arranged in the accommodating cavity.

According to the technical solution described above, the gap for storing a gas is formed between the battery cell assembly and the side beam, and the vent grooves at two ends of the edge beam are separately in communication with the exhaust channel, so that gaps at two ends of the battery pack can communicate with each other. During thermal runaway of a battery cell, the explosion-proof valve of the battery cell assembly is opened, a high-temperature gas ejected can be stored into the gap, and then the explosion-proof valve on the side beam can release pressure; and the high-temperature gas can enter the exhaust channel through the vent groove on the edge beam, so that a part of the high-temperature gas is transmitted to the other end of the battery pack to make the explosion-proof valve on the side beam at the other end release pressure, thereby resolving the problem of an insufficient exhaust speed of the explosion-proof valve caused by excessively high air pressure on one side, and improving safety.

### BRIEF DESCRIPTION OF DRAWINGS

The accompanying drawings, used to provide further understanding of the present disclosure, constitute part of the specification, and serve to explain the present disclosure along with the following particular implementations, instead of limiting the present disclosure. In the accompanying drawings:
FIG. 1 is a schematic structural diagram of a battery pack according to an exemplary embodiment;
FIG. 2 is a schematic diagram of disassembly of a battery pack according to an exemplary embodiment;
FIG. 3 is a schematic structural diagram of a battery tray according to an exemplary embodiment;
FIG. 4 is a schematic partial diagram of a battery tray according to an exemplary embodiment;
FIG. 5 is a partially enlarged view of a portion A in FIG. 4;
FIG. 6 is a partially enlarged view of a portion B in FIG. 4;
FIG. 7 is a partially enlarged view of a portion C in FIG. 4;
FIG. 8 is a first schematic partial diagram of a battery tray according to an exemplary embodiment;
FIG. 9 is a second schematic partial diagram of a battery tray according to an exemplary embodiment;
FIG. 10 is a top view of a battery pack according to an exemplary embodiment;
FIG. 11 is a third schematic partial diagram of a battery tray according to an exemplary embodiment;
FIG. 12 is a fourth schematic partial diagram of a battery tray according to an exemplary embodiment;
FIG. 13 is a fifth schematic partial diagram of a battery tray according to an exemplary embodiment;
FIG. 14 is a first schematic structural diagram of an edge beam in a battery tray according to an exemplary embodiment;
FIG. 15 is a second schematic structural diagram of an edge beam in a battery tray according to an exemplary embodiment; and
FIG. 16 is a side view of an edge beam in a battery tray according to an exemplary embodiment.

### DESCRIPTION OF EMBODIMENTS

The particular implementations of the present disclosure will be described in detail below in combination with the accompanying drawings. It should be understood that the particular implementations described herein are merely intended to describe and explain the present disclosure and are not intended to limit the present disclosure.

In the present disclosure, unless otherwise stated, the directional words used "upper", "lower", "top", and "bottom" are defined on the basis of a direction actually used by a related component. "Inside" and "outside" are described with respect to the outline of a corresponding part. Moreover, the terms "first" and "second" used in the present disclosure are to distinguish one element from another, and do not indicate a sequence and importance. In the present disclosure, when the following description relates to the accompanying drawings, the same numbers in different accompanying drawings represent the same or similar elements unless otherwise indicated.

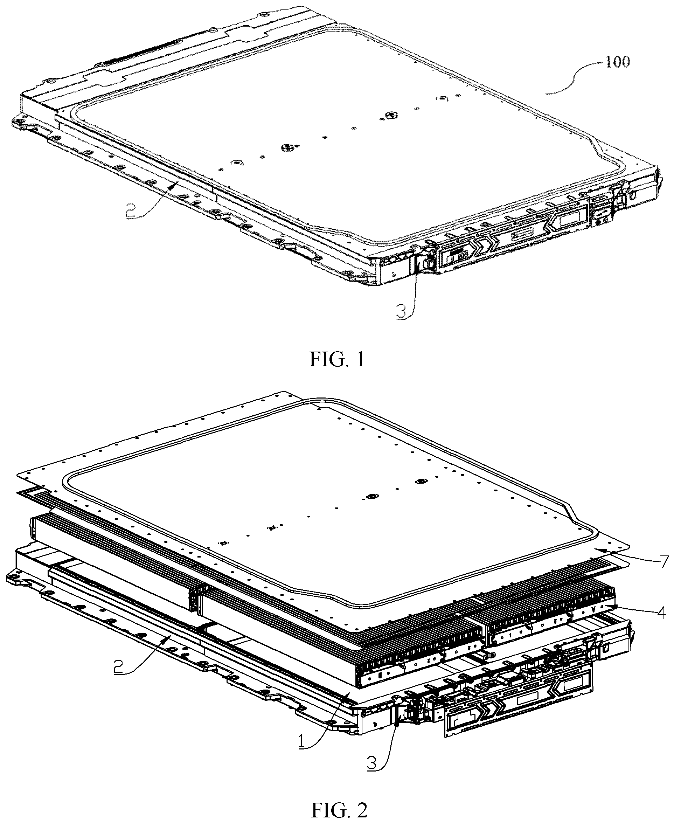

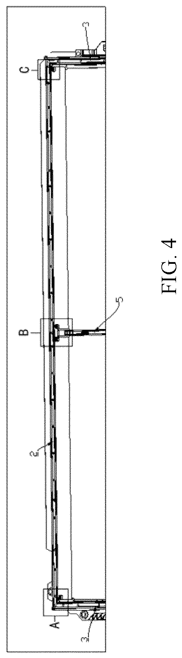

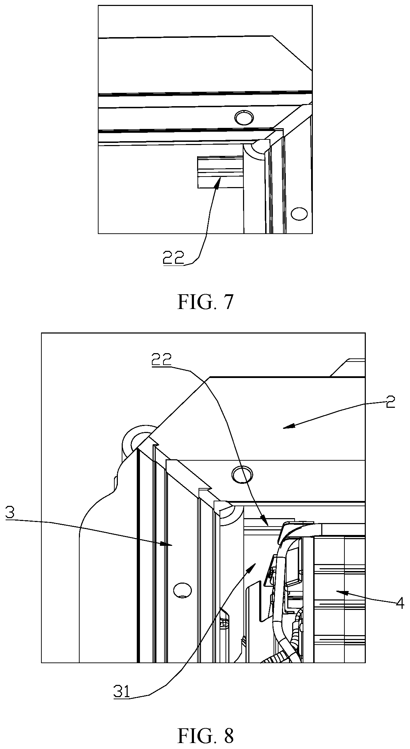

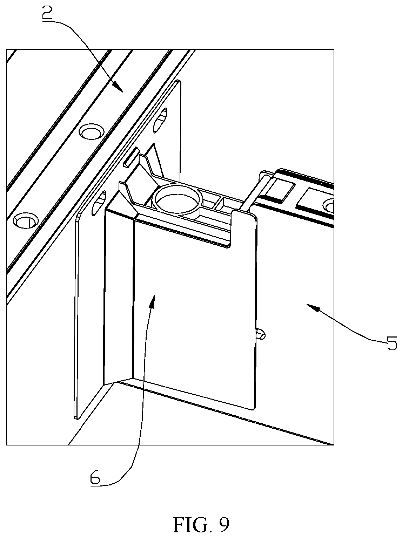

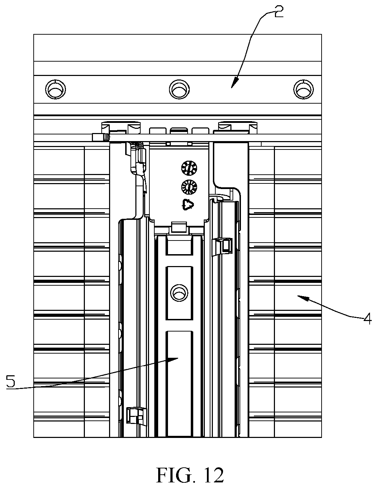

With reference to FIG. 1 to FIG. 16, the present disclosure provides a battery tray 10. The battery tray 10 may include a bottom plate 1, two side beams 3 arranged opposite each other, and two edge beams 2 arranged opposite each other. The two edge beams 2 are connected between the two side beams 3, the two side beams 3 and the two edge beams 2 are each connected to a peripheral edge of the bottom plate 1, and an accommodating cavity 8 for accommodating a battery cell assembly 4 is enclosed by the two side beams, the two edge beams, and the bottom plate 1. Specifically, the bottom plate 1 may be a cooling plate, the two side beams 3 and the two edge beams 2 form a frame portion of the battery tray 10 by means of welding, a peripheral edge of the cooling plate and the frame portion are welded, and therefore the accommodating cavity 8 for placing the battery cell battery 4 may be enclosed. Explosion-proof valves are arranged on the two side beams 3 respectively, an exhaust channel 21 extending in a length direction of the edge beam is formed on the edge beam 2, two end portions of an inner wall of the edge beam 2 are provided with vent grooves 22 that are separately in communication with the exhaust channel 21, and the vent groove 22 is configured to be able to communicate with a gap 31 between the side beam 3 and the battery cell assembly 4. The gap 31 can store a gas discharged from the battery cell assembly 4.

According to the technical solution described above, the gap for storing a gas is formed between the battery cell assembly and the side beam, and the vent grooves at two ends of the edge beam are separately in communication with the exhaust channel, so that gaps at two ends of a battery pack can communicate with each other. During thermal runaway of a battery cell, the explosion-proof valve of the battery cell assembly is opened, a high-temperature gas ejected can be stored into the gap, and then the explosion-proof valve on the side beam can release pressure; and the high-temperature gas can enter the exhaust channel through the vent groove on the edge beam, so that a part of the high-temperature gas is transmitted to the other end of the battery pack to make the explosion-proof valve on the side beam at the other end release pressure, thereby resolving the problem of an insufficient exhaust speed of the explosion-proof valve caused by excessively high air pressure on one side, and improving safety.

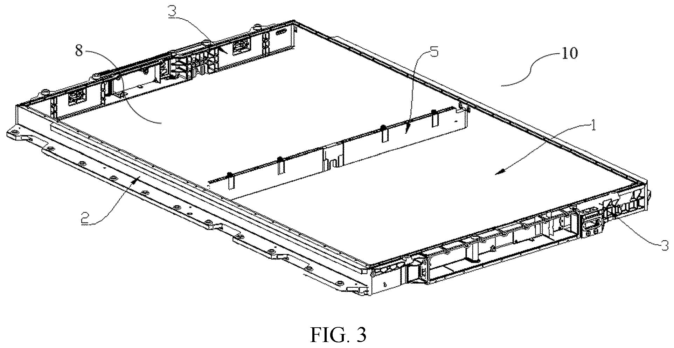

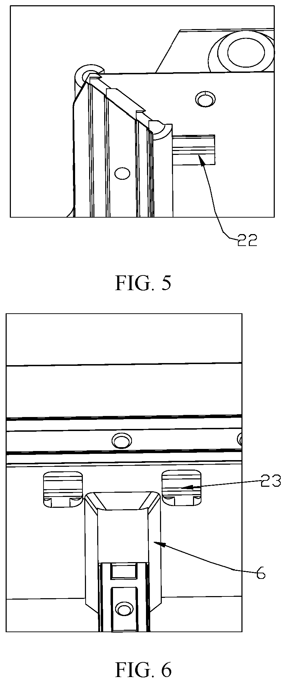

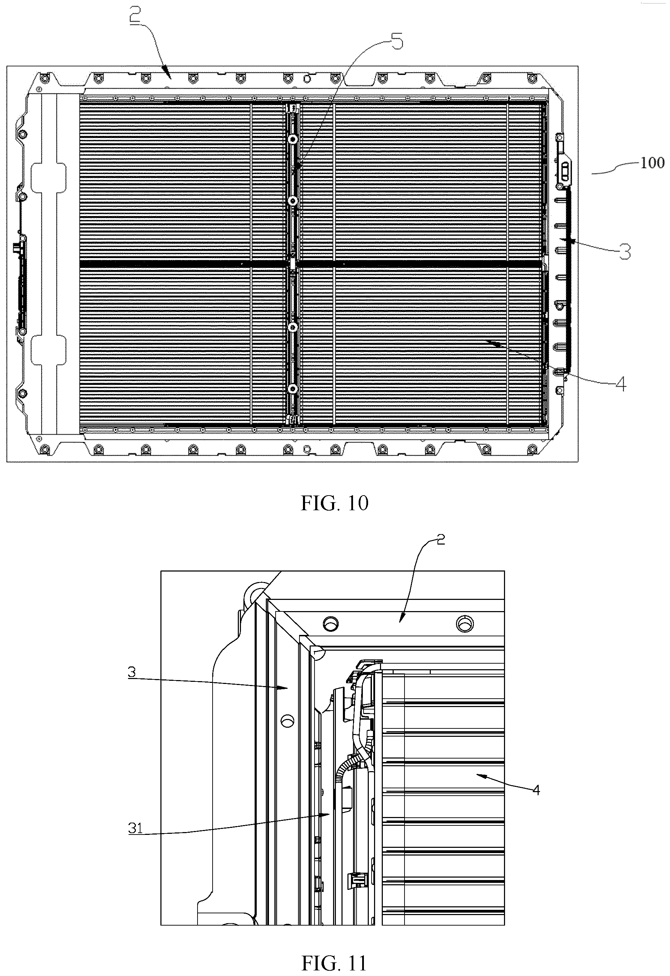

In some embodiments, with reference to FIG. 3 and FIG. 10, the battery cell assembly 4 may include a plurality of battery cell units arranged side by side, at least one separation beam 5 is connected between the two edge beams 2, and the separation beam 5 and the side beam 1 are arranged in parallel. Specifically, two ends of the separation beam 5 may be welded to the two edge beams 2 respectively, a bottom portion of the separation beam 5 and the bottom plate 1 may be bonded by means of glue, and the separation beam 5 is used for separating the battery cell units arranged side by side. In some embodiments, with reference to FIG. 6, FIG. 9, and FIG. 15, a support 6 spans the separation beam 5, and a fastening hole 23 for fastening the support 6 is provided on the edge beam 2. The support 6 is used for mounting a bridging aluminum busbar, and can insulate the separation beam 5 from the bridging aluminum busbar. In an embodiment of the present disclosure, two fastening holes 23 are provided on the edge beam 2, and a boss is arranged on the support 6, and is used for being fittingly inserted into the fastening hole 23, so as to prevent the support 6 from falling off.

According to some embodiments, with reference to FIG. 2, a sealing cover 7 covers the edge beam 2 and the side beam 3, and a sealing adhesive is arranged between the sealing cover 7 and one or both of the edge beam 2 and the side beam 3, so as to seal the accommodating cavity 8.

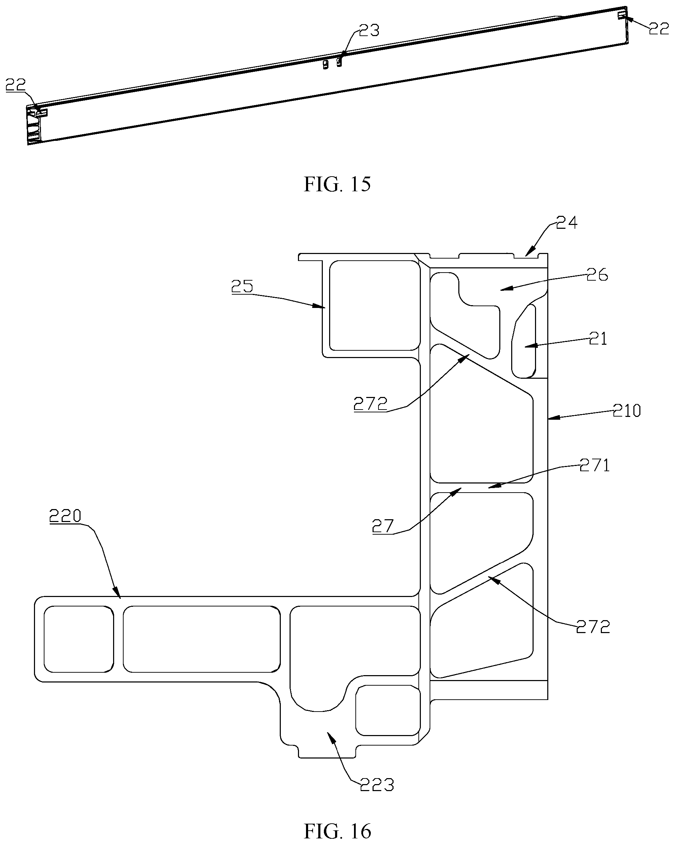

In some embodiments, a recess 24 for placing the sealing adhesive may be formed at a top end of the edge beam 2 and the side beam 3 or one of the edge beam 2 and the side beam 3. In an embodiment of the present disclosure, as shown in FIG. 16, two recesses 24 are provided on an upper surface of the edge beam 2, and are used for limiting the sealing adhesive, so that the sealing cover 7 is sealed more reliably.

In some embodiments, with reference to FIG. 16, a connecting frame 25 is connected to a top end of an outer wall of the edge beam 2, and the connecting frame 25 is used for abutting against the sealing cover 7. A function of the connecting frame is mainly to increase a sealing connection area between the edge beam 2 and the sealing cover 7, so as to improve sealing performance. Specifically, the connecting frame 25 is constructed as a "square"-shaped hollow structure, and has a small size. Therefore, weight of the edge beam 2 can be reduced.

With reference to FIG. 16, a first thickening portion 26 may be formed on a top wall of the edge beam 2, the first thickening portion 26 has a thickness greater than or equal to 11 mm, and the sealing cover 7 may be connected to the first thickening portion 26 by means of a first fastener. Specifically, the first fastener may be a bolt, and a bolt hole for fitting with the bolt is provided on the first thickening portion 26. Since the first thickening portion 26 has a thickness greater than or equal to 11 mm, the bolt hole may be designed as a blind hole, so as to ensure sealing performance of a battery pack 100. Moreover, the exhaust channel 21 may be arranged below the first thickening portion 26.

In an exemplary embodiment of the present disclosure, with reference to FIG. 16, the edge beam 2 may be configured as a hollow structure. The edge beam has a simple structure, and weight of the edge beam 2 can be reduced to the greatest extent while a function of the edge beam 2 is implemented.

With reference to FIG. 16, a plurality of ribs 27 may be connected between the inner wall and the outer wall of the edge beam 2, so as to reduce stress concentration and improve structural strength.

Specifically, with reference to FIG. 16, one first rib 271 and two second ribs 272 located on two sides of the first rib 271 respectively may be connected between the inner wall and the outer wall of the edge beam 2, the first rib 271 is vertically arranged between the inner wall and the outer wall of the edge beam 2, and the two second ribs 272 are inclined from the inner wall to the outer wall of the edge beam 2 towards a direction away from the first rib 271. When the edge beam 2 is subjected to an expansion force of the battery cell assembly 4, the first rib 271 and the second rib 272 can gradually dissipate the expansion force of the battery cell from the inner wall to the outer wall of the edge beam 2. Therefore, the expansion force of the battery cell can be better transferred to each position of the edge beam 2, thereby reducing the risk of stress concentration on some positions of the edge beam 2. It should be noted that the quantity and an arrangement manner of the ribs 27 are not limited to the cases described above, and various quantities and arrangement manners fall within the scope of protection of the present disclosure.

According to an exemplary embodiment of the present disclosure, with reference to FIG. 16, the edge beam 2 may include a body section 210 and a connecting section 220, the connecting section 220 is vertically arranged at a bottom end of an outer wall of the body section 210, and both the exhaust channel 21 and the vent groove 22 are provided on the body section 210. In some embodiments, the fastening hole 23, the recess 24, the connecting frame 25, the first thickening portion 26, and the rib 27 are arranged on the body section 210. A plurality of lifting lug holes 221at intervals are provided on the connecting section 220 in a length direction of the connecting section, so as to be connected to a vehicle. Specifically, a screw sleeve may be welded to the lifting lug hole 221, and a bolt is fastened to the whole vehicle through the lifting lug hole 221, so as to fasten the battery pack 100 to the vehicle.

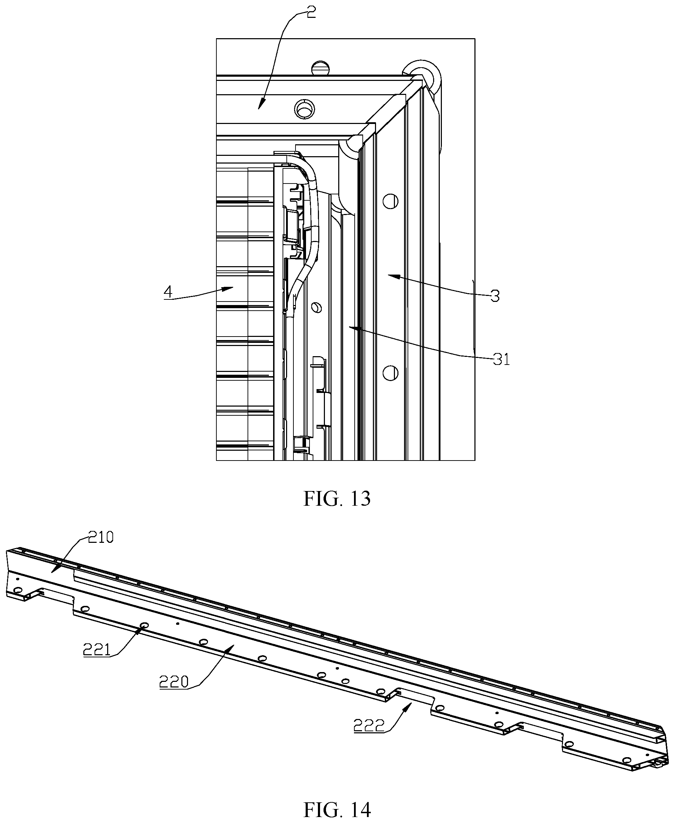

In some embodiments, with reference to FIG. 14, at least one inwardly recessed notch 222 is provided at an end portion of the connecting section 220 away from the body section 210, so as to reduce weight of the edge beam 2. In an embodiment of the present disclosure, three notches 222 are provided on the connecting section 220.

Furthermore, with reference to FIG. 16, a second thickening portion 223 may be formed on a bottom wall of the connecting section 220 close to the body section 210, the second thickening portion 223 may have a thickness greater than or equal to 11 mm, a lower end of the bottom plate 1 is provided with a guard plate, and the guard plate is connected to the second thickening portion 223 by means of a second fastener. Specifically, the second fastener may be a bolt, and a bolt hole used for fitting with the bolt is provided on the second thickening portion 223. Since the second thickening portion 223 has a thickness greater than or equal to 11 mm, the bolt hole may be designed as a blind hole, so as to ensure the sealing performance of the battery pack 100.

According to a second aspect of the present disclosure, a battery pack 100 is further provided. The battery pack 100 includes the battery tray 10 described above and a battery cell assembly 4 arranged in an accommodating cavity 8. The battery pack 100 has all the beneficial effects of the battery tray 10 described above, which are not described herein again.

The preferred implementations of the present disclosure are described in detail above in combination with the accompanying drawings. However, the present disclosure is not limited to specific details of the implementations described above. Within the scope of the technical concept of the present disclosure, various simple variations can be made to the technical solutions of the present disclosure, and these simple variations all fall within the scope of protection of the present disclosure.

Moreover, it should be noted that various specific technical features described in the particular implementations described above can be combined in any suitable manner without contradiction, and to avoid unnecessary repetition, various possible combinations are not separately explained in the present disclosure.

In addition, the various different implementations of the present disclosure may also be combined in any manner, and the combination should also be considered as content disclosed in the present disclosure provided that the combination does not deviate from the idea of the present disclosure.

## Claims

1. A battery tray (10), comprising:
a bottom plate (1);
two side beams (3) arranged opposite to each other; and
two edge beams (2) connected between the two side beams (3), wherein the two edge beams (2) are arranged opposite to each other, wherein
the two side beams (3) and the two edge beams (2) are each connected to a peripheral edge of the bottom plate (1), an accommodating cavity (8) for accommodating a battery cell assembly (4) is enclosed by the two side beams (3), the two edge beams (2), and the bottom plate (1), explosion-proof valves are arranged on the two side beams (3) respectively, an exhaust channel (21) extending in a length direction of the edge beam is formed on the edge beam (2), two end portions of an inner wall of the edge beam (2) are provided with vent grooves (22) respectively, the vent groove (22) is in communication with the exhaust channel (21), and the vent groove (22) is configured to be able to communicate with a gap (31) between the side beam (3) and the battery cell assembly (4).

2. The battery tray (10) according to claim 1, wherein the battery cell assembly (4) comprises a plurality of battery cell units arranged side by side, at least one separation beam (5) is connected between the two edge beams (2), the separation beam (5) is used for separating the battery cell units arranged side by side, a support (6) spans the separation beam (5), and a fastening hole (23) for fastening the support (6) is provided on the edge beam (2).

3. The battery tray (10) according to claim 1 or 2, wherein a sealing cover (7) covers the edge beam (2) and the side beam (3), and a sealing adhesive is arranged between the sealing cover (7) and the edge beam (2) and/or the side beam (3).

4. The battery tray (10) according to claim 3, wherein a recess (24) for placing the sealing adhesive is formed at a top end of the edge beam (2) and/or the side beam (3).

5. The battery tray (10) according to claim 3 or 4, wherein a connecting frame (25) is connected to a top end of an outer wall of the edge beam (2), and the connecting frame (25) is used for abutting against the sealing cover (7).

6. The battery tray (10) according to any one of claims 3 to 5, wherein a first thickening portion (26) is formed on a top wall of the edge beam (2), the first thickening portion (26) has a thickness greater than or equal to 11 mm, and the sealing cover (7) is connected to the first thickening portion (26) by means of a first fastener.

7. The battery tray (10) according to any one of claims 1 to 6, wherein the edge beam (2) is configured as a hollow structure.

8. The battery tray (10) according to claim 7, wherein a plurality of ribs (27) are connected between the inner wall and the outer wall of the edge beam (2).

9. The battery tray (10) according to claim 8, wherein one first rib (271) and two second ribs (272) are connected between the inner wall and the outer wall of the edge beam (2), the two second ribs (272) are located on two sides of the first rib (271) respectively, the first rib (271) is vertically arranged between the inner wall and the outer wall of the edge beam (2), and the two second ribs (272) are inclined from the inner wall to the outer wall of the edge beam (2) towards a direction away from the first rib (271).

10. The battery tray (10) according to any one of claims 1 to 9, wherein the edge beam (2) comprises a body section (210) and a connecting section (220), the connecting section (220) is vertically arranged at a bottom end of an outer wall of the body section (210), both the exhaust channel (21) and the vent groove (22) are provided on the body section (210), and a plurality of lifting lug holes (221) at intervals are provided on the connecting section (220) in a length direction of the connecting section, so as to be connected to a vehicle.

11. The battery tray (10) according to claim 10, wherein at least one inwardly recessed notch (222) is provided at an end portion of the connecting section (220) away from the body section (210).

12. The battery tray (10) according to claim 10 or 11, wherein a second thickening portion (223) is formed on a bottom wall of the connecting section (220) close to the body section (210), the second thickening portion (223) has a thickness greater than or equal to 11 mm, a lower end of the bottom plate (1) is provided with a guard plate, and the guard plate is connected to the second thickening portion (223) by means of a second fastener.

13. A battery pack (100), comprising: the battery tray (10) according to any one of claims 1 to 12 and the battery cell assembly (4) arranged in the accommodating cavity (8).
